# EUROPEAN PATENT SPECIFICATION

(11) **EP 1 887 801 B1**
(45) Date of publication and mention of the grant of the patent: **09.01.2013**
(21) Application number: 06746404.0
(22) Date of filing: 16.05.2006
(51) Int. Cl.: G08B 13/196, G07C 9/00

(54) **IMAGING INFORMATION MANAGEMENT SYSTEM**
BILDGEBUNGSINFORMATIONS-VERWALTUNGSSYSTEM
SYSTEME DE GESTION DE DONNEES D'IMAGERIE

(30) Priority: 16.05.2005 JP 2005142313
(43) Date of publication of application: 13.02.2008
(73) Proprietor: Dai Nippon Printing Co., Ltd., Tokyo 162-8001 (JP)
(72) Inventor: ANEGAWA, Takehiko, c/o DAI NIPPON PRINTING CO. LTD, Tokyo 1628001 (JP); YANO, Yoshihiro, c/o DAI NIPPON PRINTING CO. LTD, Tokyo 1628001 (JP)
(74) Representative: Needle, Jacqueline
(86) International application number: PCT/JP2006/309690
(87) International publication number: WO 2006/123629

(56) References cited:
- JP-A- 11 313 310
- JP-A- 2001 167 306
- JP-A- 2004 030 022
- JP-A- 2005 051 302
- US-A- 5 095 196
- US-A1- 2001 031 072
- US-A1- 2005 055 582

## Description

The present invention relates to an image information management system.

Conventionally, a suspicious individual is imaged with an imaging device such as a security camera in order to use it for security or as evidential information for identifying a criminal person.

It is known to use a system to image a predetermined place using a security camera at any time and to store the image information as a picture so that a criminal behavior is confirmed by displaying the recorded image information on a display in a case of a crime and/or an accident. In addition, suspicious individual imaging systems, in which a suspicious individual intrusion detector is provided, so that in a case of intrusion, the suspicious individual is imaged by operating a security camera, are described in Japanese Laid-Open Patent Applications Nos. 9-198577, 10-222773, 2001-302133, and 2004-5511.

However, where the criminal person is a trusted employee, as in an office crime, he or she is not imaged by the suspicious individual intrusion detector as the suspicious individual, and so the imaging system of the suspicious individual is useless.

In this case, the predetermined place is imaged using the security camera at any time and, in a time-consuming exercise, the picture of the suspicious employee is searched for out of historical image information.

There is also a system capable of starting shooting by the imaging device by reading the ID information stored on the ID card owned by the employee with using a reader/writer, and capable of searching the image information on the basis of the ID information by associating the image information shot by the imaging device with the ID information and storing them.

However, when the suspicious person having no ID card illegally enters the room, the imaging device does not shoot the video, which becomes problematic for security reason.

US-A-2005/0055582 describes a system for providing stand-off biometric verification of a driver of a vehicle at a control gate while the vehicle is moving. A RFID vehicle tag reader scans and reads data from an RFID vehicle tag of the vehicle that is trying to pass through the gate. A RFID personal tag reader reads data from an RFID personal tag carried by personnel who are driving in the vehicle. A facial detection and verification system scans and reads facial images for the driver. All the data and facial images detected by the reader are sent to a computer for further processing (final face verification).

US-A-5095196 describes a system for examining a passer having an ID card including a photograph and key data for searching registered data of the passer. This system has a data base storing registered data including a video image of the registered ID card owner, a video camera for capturing the passer's figure and a scanner for scanning the photograph of the ID card. The system searches corresponding data, including the video image data, in the data base, using the key data, and displays the found image, passer's image and the scanned photograph image in a display for comparison by an examiner.

US-A-2001/0031072 describes a facial image recognition system in which a camera photographs and inputs a facial image of the human recognition object. The image processing section extracts a feature value of the face of the human recognition object from a facial image inputted by the camera and collates the feature value extracted with a standard feature value registered in advance so as to recognize a facial image of the human recognition object.

The present invention seeks to provide an image information management system which enables stored image information to be efficiently searched.

According to the present invention there is provided an image information management system comprising:
a processing device; and
a plurality of electronic devices connected to the processing device by a communication line,
each electronic device having a a reading device for reading unique information from a storage medium in which the unique information is stored;
a plurality of imaging devices, each imaging device comprising:
   an imaging unit which automatically starts shooting a video at a time of detecting a change of a picture image in an image area to produce an image information;
a storage unit which stores a management number, being identification information of the imaging device; and
a unit which transmits the management number and the image information shot by the imaging unit to the processing device; and
the processing device comprising:
   a database which receives the unique information read by the reading device, the image information shot by the imaging device, and the management number and associates and stores the unique information and the image information;
   a display unit which displays the unique information and the associated image information stored in the database as a same picture image; and
   an imaging device information database which associates and stores the management number identifying the imaging device with a further management number identifying an electronic device that can be shot by the imaging device;
wherein the processing device includes:
   a control unit which associates and stores the unique information, and the image information including the management number identifying the imaging device in the database in the case where the unique information is received,
   wherein the control unit associates and stores the image information including the management number identifying the imaging device and the further management number identifying an electronic device shot by the imaging device in the database in the case where only the image information from the imaging device, and no unique information from the reading device is received; and
   an abnormal state informing unit which, on receiving only the image information from the imaging device and no unique information from the reading device informs of the existence of an abnormal state.

As embodiments of the image information management system associate the image information with the unique information, when the processing device does not receive the unique information an abnormal state is immediately recognized. This also enables the image information of a suspicious person having no storage medium to be efficiently searched from the database.

In an embodiment, the storage unit of the imaging device stores electronic device identification information specifying the electronic devices existing in an image area shot by the imaging device, and the unit of the imaging device transmits to the processing device, not only the image information but also the electronic device identification information at the time of transmitting the image information to the processing device.

Since not only the image information but also the electronic device identification information is transmitted to the processing device at the time of transmitting the image information to the processing device, the image information management system can efficiently search the image information of the electronic user from the database based on the electronic identification information at the time of searching the image information.

Embodiments of the present invention will hereinafter be described, by way of example, with reference to the accompanying drawings, in which:
FIG. 1 is a diagram for explaining the outline of the configuration of an image information management system;
FIG. 2 is a plan view of an ID card used in the image information management system;
FIG. 3 is a cross-sectional view of the ID card taken along line A-A of FIG. 2;
FIG. 4 is a plan view of a non-contact IC tag provided on an ID card;
FIGS. 5 and 6 are block diagrams of an image information management system;
FIG. 7 is a table showing an example of information registered in the image information database of an image information management system; and
FIG. 8 is a flow chart showing a procedure of the image information management system of the invention.

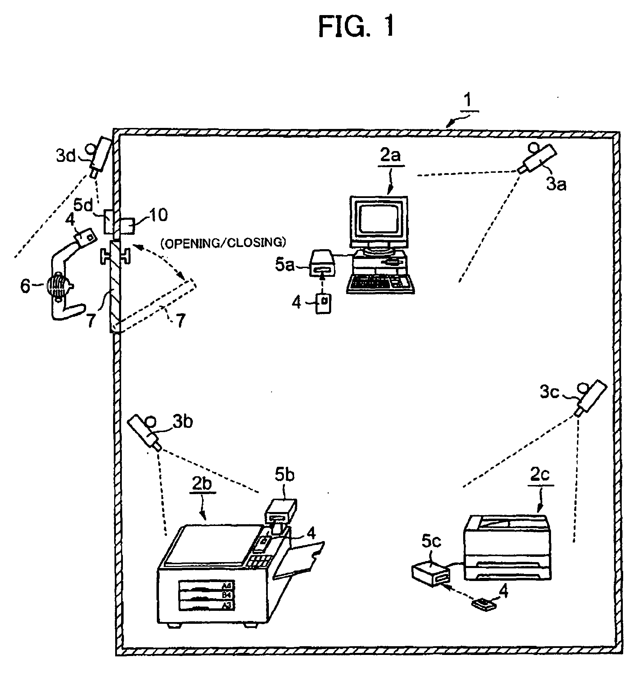

As shown in FIG. 1, a room 1, in which room entrance is managed, includes a plurality of electronic devices 2 including a personal computer 2a, a copy machine 2b, and a printer 2c. The room also includes an imaging device 3 including security cameras 3a, 3b and 3c for shooting a video of a user 6 of the electronics 2.

Moreover, card readers 5a, 5b and 5c being reading devices 5 are connected to each of the electronic devices 2.

The card readers 5a, 5b and 5c have functions to read an employee ID number being the unique information stored on the ID card 4 being the storage medium owned by the user 6.

At an entrance/exit of the room 1, an opening/closing door 7 whose locking is managed by the ID card 4 is provided. A card reader 5d for reading the employee ID number being the unique information stored on the ID card 4 is provided on the outer side of the entrance/exit of the room 1.

A security camera 3d for shooting a video of the person entering the room 1 from the entrance/exit thereof is further provided, and can shoot the entering person.

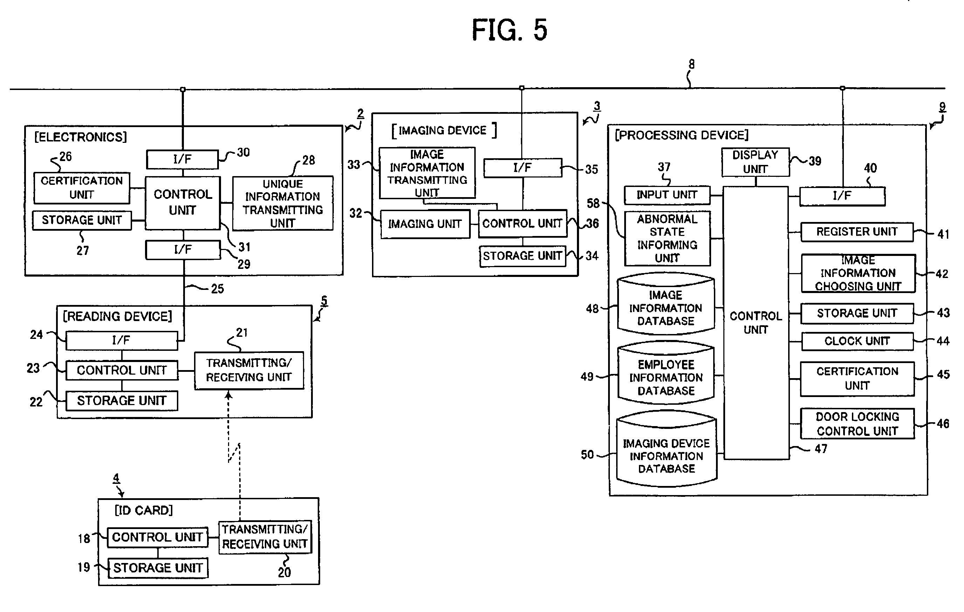

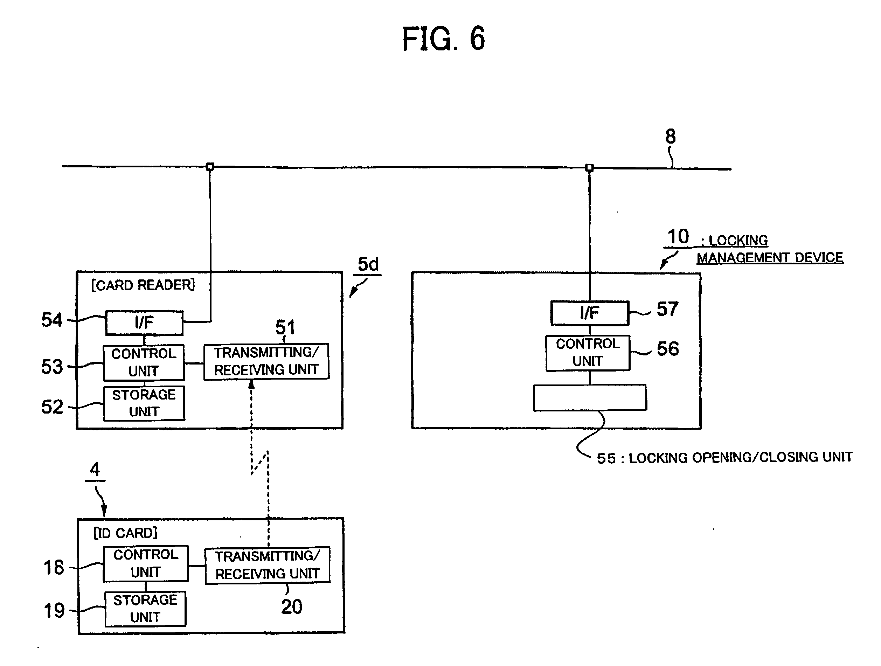

As shown in FIG. 5 and FIG. 6, the electronics 2 such as the personal computer 2a, the copy machine 2b and the printer 2c, the imaging device 3 such as the card reader 5d, the security cameras 3a, 3b, 3c and 3d, and the locking management device 10 are connected to the processing device 9 including the computer by the communication line 8.

The ID card 4 being the storage medium may be a storage medium: capable of storing the unique information capable of specifying the user of the electronics; and capable of making the reading device read the unique information. This point is not particularly limited. In the shown recording medium, such a case that the non-contact IC card having an IC module for contact is used is shown as an example.

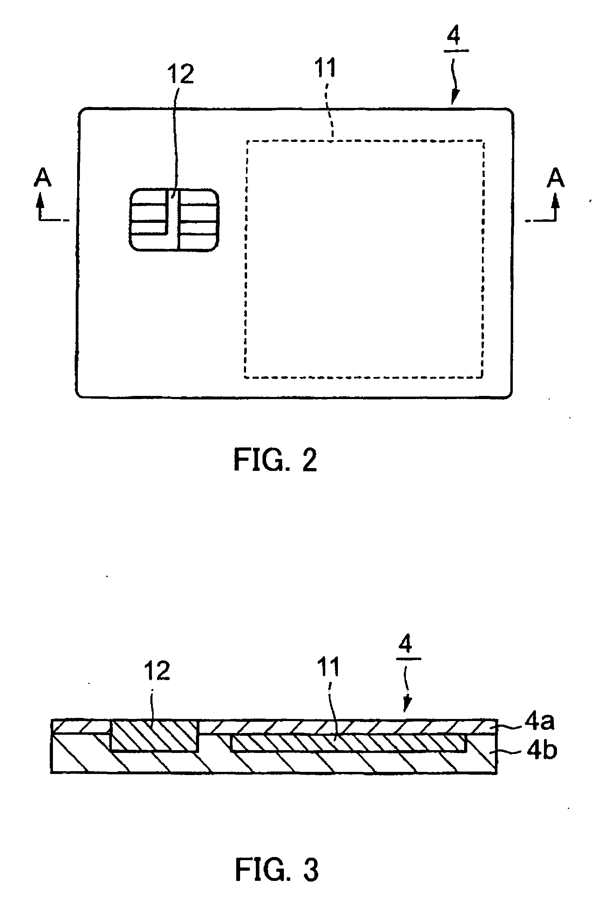

As shown in FIG. 2 to FIG. 4, the ID card 4 has such a configuration that a non-contact IC tag 11 is integrated inside the card base materials 4a and 4b and an IC module 12 is embedded.

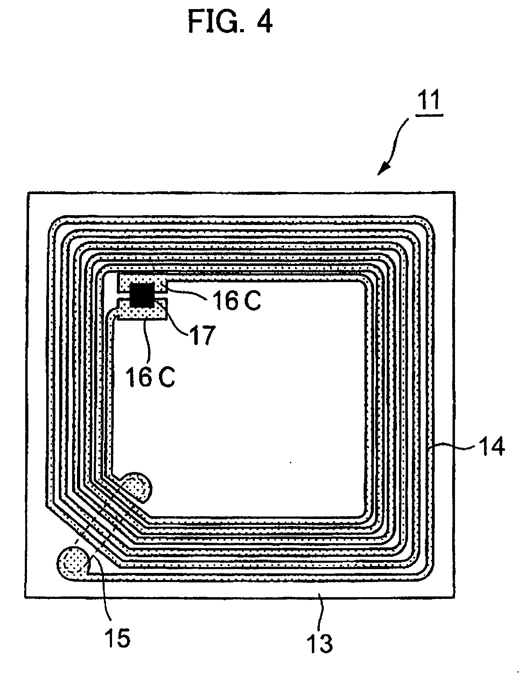

The non-contact IC tag 11 is also referred to as "non-contact data carrier" or "RFID", and a transmitting/receiving unit 20 including a coil pattern is formed on a base material 13 made of plastic, as shown in FIG. 4. The non-contact IC tag 8 forms a resonant circuit with using a coil and a capacitative element to receive and transmit an acoustic wave of a constant frequency.

Additionally, as another system, power transmission and data transmission may be performed by electromagnetic induction of a carrier wave from a reader/writer. Generally, frequency bands of 135kHz (medium wave), 13.56MHz and 2.45GHz (micro wave) are used.

In the case of the shown example, the transmitting/receiving unit 14 including the coil pattern forms a jumping circuit on the rear side of the base material 13 by a continuity member 15, and is connected to a bump on the rear side of an IC chip 17 by a coil connection terminal 16C. The IC chip 17 includes a control unit 18 serving as a CPU and a storage unit 19 serving as a memory. The storage unit 19 registers the employee ID number being the unique information.

In the shown example, the capacitative element is integrated in the IC chip 17. The non-contact IC tag 11 is formed by forming the coil pattern by the photo etching or the etching after resist print of metallic foil such as aluminum foil laminated on a resin base material, mounting the IC chip 17, and providing a protective coating. The size can be a size equal to or smaller than 30mm×30mm.

The resin base material 13 used for the non-contact IC tag 11 can be made of various kinds of materials such as PET, polypropylene, polyethylene, polystyrene and nylon. Moreover, the resin base material 13 may be made of paper. Though thickness thereof can be 15-300 µm, 20-100 µm is preferred in consideration of the strength, the processing work property and the cost. Though copper foil, aluminum foil and iron foil can be used as the metallic foil, the aluminum foil is preferred in consideration of the cost and the processing property, and the thickness about 6-50 µm is preferred.

In reading the information recorded on the non-contact ICtag11, the card reader being the reading device sends a resonating calling signal to the non-contact IC tag 11, and reads a response signal from the non-contact IC tag 11. In addition, the card reader reads the information recorded in the memory of the IC chip 17 of the non-contact IC tag 11. Thereby, reading the information is executed.

Next, a description will be given of the configuration of the image information management system with reference to FIGS. 5 and 6.

First, a reading device 5 provided in the electronic device 2 includes a transmitting/receiving unit 21, a storage unit 22, a control unit 23 and an interface (I/F) 24.

The transmitting/receiving unit 21 receives the employee ID number being the unique information from the transmitting/receiving unit 20 of the ID card 4 without contact.

The storage unit 22 includes management number being the identification information predetermined for managing each of the electronics 2, and a control program. The control program is programmed to transmit the employee ID number being the unique information received by the transmitting/receiving unit 21 and the management number to the electronics 2 via a communication wire 25.

The electronics 2 include a certification unit 26, a storage unit 27, a unique information transmitting unit 28, interfaces (I/F) 29 and 30 and a control unit 31.

Based on the employee ID number being the unique information received from the reading device 5, the certification unit 26 determines whether or not the user is the person permitted to use the electronics 2. The determination method is to certificate the user in a case that, by a collation process with collation information stored in the storage unit 27, a collation result of coincidence of both of the information is obtained.

The electronics 2 are in a locked state and unusable until the certification in the certification unit 26 is approved. When the certification is approved, the locking is released, and the electronics 2 become usable.

When the locking of the electronics 2 is released and the electronics 2 become usable, the unique information transmitting unit 28 transmits the employee ID number being the unique information received from the reading device 5 to the processing device 9 via the communication line 8.

The imaging device 3 includes an imaging unit 32 having a detection function to automatically start shooting a video at the time of detecting the change of the picture image in the image area, an image information transmitting unit 33, a storage unit 34, an interface (I/F) 35 and a control unit 36.

A specific image area capable of shooting the video is set to the imaging unit 32 in advance, and the shooting area and the vicinity of the electronics can be shot.

The storage unit 34 stores the control program and the management number being the identification information of the imaging device 3.

The image information transmitting unit 33 has a function to transmit the image information shot by the imaging unit 32 and the management number to the processing device 9 via the communication circuit 8.

The electronics which can be shot by the imaging device 3 may be one of the electronics, or the image area may be set in order to shoot the plural electronics.

The processing device 9 includes an input unit 37, a display unit 39, an interface (I/F) 40, a register unit 41, an image information choosing unit 42, a storage unit 43, a clock unit 44, a certification unit 45, a door locking control unit 46, a control unit 47, an image information database 48, an employee information database 49, an imaging device information database 50 and an abnormal state informing unit 58.

The employee ID number which is set for each employee, and information associated with the employee ID number, e.g., the name, the post, the department, the phone number and the company-joining date, are registered in the employee information database 49 as the employee information.

In order to specify the electronics which can be imaged by each of the imaging devices 3, information obtained by associating the management number being the identification information of each of the imaging devices 3 and the management number of the electronics which can be imaged by each of the imaging devices 3 is registered in the imaging device information database 50.

The register unit 41 associates the employee ID number being the unique information received from the electronics 2, the image information received from the imaging device 3, the clock information and the management number of the imaging device via the communication line 8, and registers them in the image information database 48.

Further, based on the employee ID number being the unique information received from the electronics 2, the register unit 41 chooses the preset information out of the employee information registered in the employee information database 49, and associates it with the employee ID number to register them in the image information database 48.

In addition, the clock unit 25 of the processing device 9 makes it clear what time the employee ID number being the unique information is received from the electronics 2 via the communication line 8. The employee ID number and the image information received from the electronics 2 are registered in the image information database 48 so that the time of receiving of the employee ID number and the imaged time information of the image information received from the electronics 2 coincide with each other. Namely, the employee specified by the employee ID number is seen in the picture imaged at the substantially same time as that of reading the employee ID number in the reading device 5.

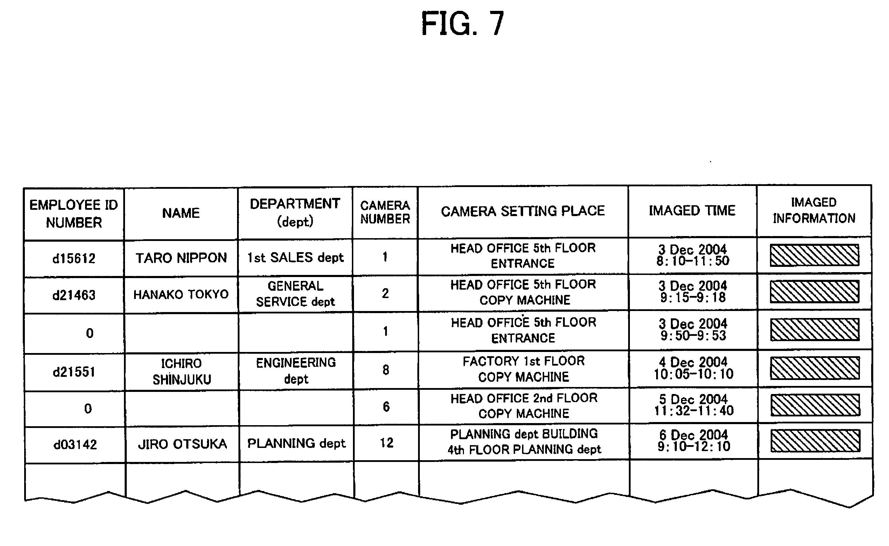

FIG. 7 shows an example of the information registered in the image information database 48. As shown in FIG. 7, as the information registered in the image information database 48, the name, the department, the camera number, the camera setting place, the imaged time and the image information, associated with the employee ID number being the unique information, are registered. Therefore, when only the picture of the specific employee is chosen and seen, the image information of the employee can be easily displayed and seen on the display unit, based on the employee ID number and the name being the unique information.

In addition, the display unit 39 has a function to display the unique information and the image information associated with each other and stored in the image information database 48 of the processing device 9 as the same picture image.

Thereby, even when someone steals the storage medium of the other person and illegally uses it, by seeing and confirming the unique information and the image information displayed on the display unit 39, it becomes possible to immediately confirm whether or not the illegal action is executed.

In such a case that the employee ID number is not read by the card readers 5a, 5b and 5c being the reading devices 5, instead of the employee ID number, "0" is registered as the identification information indicating that no employee ID number being the unique information is received. Thus, when "0" is registered in the space for originally registering the employee ID number, such a probability that a suspicious person is shot is predicted high. Therefore, when "0" is registered, the name and department of the employee are not registered.

Moreover, the certification unit 45 has a function to execute the certification process of the employee ID number being the unique information received from the card reader 5d used at the time of entering of the room 1. When the certification is approved, the door locking control unit 46 transmits the instruction signal for releasing the locking of the opening/closing door to the locking management device 10 via the communication line 8.

Additionally, in such a case that the image information of the specific employee is displayed on the display unit 39 to be seen, the image information choosing unit 42 chooses the image data associated with the employee ID number registered in the image information database 48 out of the employee ID number being the unique information inputted from the input unit 37 by the browser to be registered, based on the employee ID number being the unique information. Then, the image information choosing unit 42 displays the unique information and the image information on the display unit 39 as the same picture image.

The abnormal state informing unit 58 has a function to inform the abnormal state in such a case that only the image information is received from the imaging device 3 and no unique information is received from the reading device. The function of informing the abnormal state is executed by various kinds of methods such as making an alarm sound, transmission of alarm information via e-mail and alarm display on the display unit.

As shown in FIG. 6, the card reader 5d provided on the outer side of the entrance/exit of the room 1 and the locking management device 10 for managing the locking state of the opening/closing door 7 whose locking is managed are connected to the communication line 8.

The card reader 5d includes a transmitting/receiving unit 51, a storage unit 52, a control unit 53 and an interface (I/F) 54. The transmitting/receiving unit 51 receives the employee ID number being the unique information from the transmitting/receiving unit 20 of the ID card 4 without contact.

The storage unit 52 includes the management number capable of specifying the card reader 5d and the control program. The control program is programmed to transmit the employee ID number being the unique information received by the transmitting/receiving unit 51 and the management number to the processing device 9 via the communication line 8.

The locking management device 10 includes a locking opening/closing unit 55 for varying the opening/closing state of the opening/closing door 7, a control unit 56 and an interface (I/F) 57.

When receiving the instruction signal for releasing the locking of the door from the processing device 9 via the communication line 8, the locking opening/closing unit 55 releases the door locking, which makes it possible for the employee to enter the room. Thereby, it can be prevented that a person having no ID card 4, such as a third person other than the employee, enters the room.

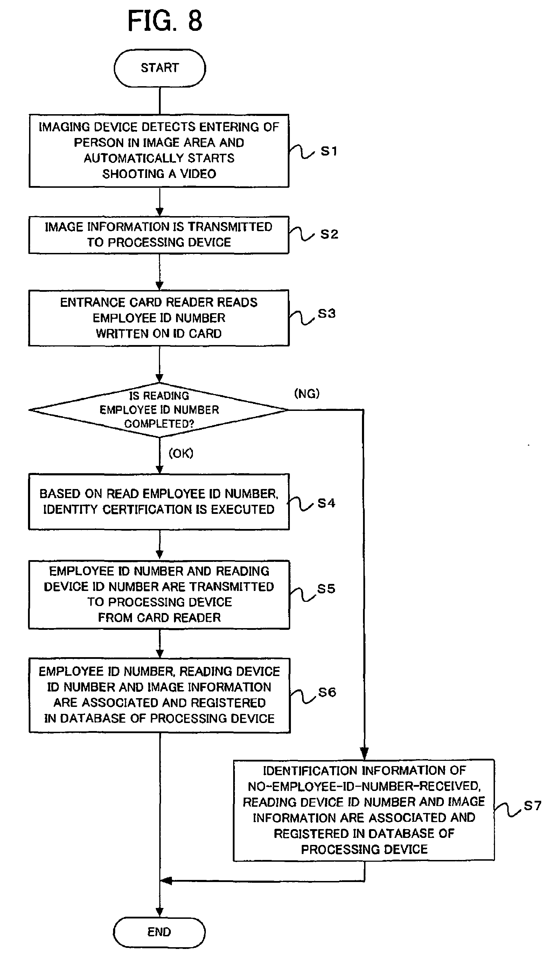

Next, a description will be given of the procedure of the image information management system with reference to a flow chart shown in FIG. 8.

On detecting the change of the image by the entering of the person in the image area, the imaging device 3 set at the entrance of the gate automatically starts shooting the video (step S1). Then, the imaging device 3 continues shooting the video for a predetermined time period from such a state that the imaging device 3 does not detect the change of the picture image in the image area, and automatically finishes shooting the video. The image information shot by the imaging device 3 is transmitted to the processing device 9 (step S2).

The employee ID number being the unique information stored on the ID card 4 owned by the employee is read by the card reader 5d being the reading device provided at the entrance of the gate (step S3). In such a case that the employee ID number is read, the identity certification is subsequently executed based on the employee ID number read by the card reader 5d being the reading device (step S4).

When the identity certification is approved, the locking of the entrance door is released, and the room becomes enterable. At the same time, the employee ID number read by the card reader 5d being the reading device and the reading device ID number capable of specifying the card reader 5d being the reading device are transmitted to the processing device 9 from the card reader 5d being the reading device (step S5).

When receiving the employee ID number and the reading device ID number, the processing device 9 extracts the name and the department from the information registered in the employee information database 49 based on the received employee ID number, by the register unit, and associates them with the employee ID number to register them into the image information database 48. At the same time, based on the reading device ID number, the processing device 9 associates the image information received from the imaging device with the camera number, the camera setting place and the imaged time to register them (step S6).

On the other hand, in such a case that the processing device 9 does not receive the employee ID number from the imaging device 3 within the predetermined time period from the time of receiving the image information from the imaging device 3, the processing device 9 associates the image information and the reading device ID information and stores them in the image information database 48 being a storage unit of the processing device 9. At the same time, the processing device 9 associates the identification information of no-employee-ID-number-received indicating that no employee ID number is received, and stores them (step S7). The identification information indicating that no employee ID number is received may be optionally determined, and may be indicated as "0", for example.

By the above-mentioned process, the image information of the suspicious individual having no ID card 4 can be associated with the identification information indicating that no employee ID number is received to be stored. When only the image information of the suspicious individual is extracted and checked, the image information can be easily extracted from the identification information.

In the above embodiment, such a case that the employee ID card owned by the employee is used as the storage medium is explained. However, the storage medium is not limited to the ID card. Namely, the storage medium is applicable to various kinds of storage media owned by the person, such as a ticket and a room key used in a hotel.

The present invention provides a technique of executing use management of electronics and limitation of illegal use thereof, room entrance management, entrance management and visiting management with using a storage medium such as an IC card. Thus, the present invention is usable for various kinds of management such as use management of office facilities and security management of building.

## Claims

1. An image information management system comprising:
a processing device (9); and
a plurality of electronic devices (2) connected to the processing device (9) by a communication line (8),
each electronic device (2) having a a reading device (5) for reading unique information from a storage medium (4) in which the unique information is stored;
a plurality of imaging devices, each imaging device (3) comprising:
an imaging unit (32) which automatically starts shooting a video at a time of detecting a change of a picture image in an image area to produce an image information;
a storage unit (34) which stores a management number, being identification information of the imaging device (3) ; and
a unit (33) which transmits the management number and the image information shot by the imaging unit (32) to the processing device (9); and
the processing device (9) comprising:
a database (48) which receives the unique information read by the reading device (5), the image information shot by the imaging device (3), and the management number and associates and stores the unique information and the image information;
a display unit (39) which displays the unique information and the associated image information stored in the database (48) as a same picture image; and
an imaging device information database (50) which associates and stores the management number identifying the imaging device (3) with a further management number identifying an electronic device (2) that can be shot by the imaging device;
wherein the processing device (9) includes:
a control unit (47) which associates and stores the unique information, and the image information including the management number identifying the imaging device (3) in the database (50) in the case where the unique information is received,
wherein the control unit (47) associates and stores the image information including the management number identifying the imaging device (3) and the further management number identifying an electronic device (2) shot by the imaging device (3)in the database (50) in the case where only the image information from the imaging device, and no unique information from the reading device is received; and
an abnormal state informing unit (58) which, on receiving only the image information from the imaging device (3) and no unique information from the reading device (5) informs of the existence of an abnormal state.

2. An image information management system as claimed in Claim 1,
wherein the storage unit (34) of the imaging device stores electronic device identification information specifying the electronic devices (2) existing in an image area shot by the imaging device,
and wherein the unit (33) of the imaging device (3) transmits to the processing device (9) not only the image information but also the electronic device identification information at the time of transmitting the image information to the processing device.

## Patentansprüche

1. Bildinformations-Verwaltungssystem, umfassend:
ein Bearbeitungsgerät (9), und
eine Vielzahl von durch eine Kommunikationsverbindung (8) mit dem Bearbeitungsgerät (9) verbundenen elektronischen Geräten (2),
wobei jedes elektronische Gerät (2) ein Lesegerät (5) zum Auslesen einer eindeutigen Information aus einem Speichermedium (4), in dem die eindeutige Information gespeichert ist, aufweist,
eine Vielzahl von bildgebenden Geräten, wobei jedes bildgebende Gerät (3) umfasst:
eine bildgebende Einheit (32), die eine Videoaufnahme automatisch startet, um eine Bildinformation zu erzeugen, wenn eine Veränderung einer Bildansicht in einem Bildbereich detektiert wird;
eine Speichereinheit (34), die eine Verwaltungsziffer speichert, welche die Identifikationsinformation des bildgebenden Gerätes (3) ist; und
eine Einheit (33), die die Verwaltungsziffer und die durch die bildgebende Einheit (32) aufgenommene Bildinformation an das Bearbeitungsgerät (9) überträgt; und
das Bearbeitungsgerät (9), umfassend:
eine Datenbank (48), die die durch das Lesegerät (5) ausgelesene eindeutige Information, die durch das bildgebende Gerät (3) aufgenommene Bildinformation und die Verwaltungsziffer erhält, und die eindeutige Information und die Bildinformation zuordnet und speichert;
eine Anzeigeeinheit (39), die die eindeutige Information und die zugehörige, in der Datenbank (48) gespeicherte Bildinformation als identische Bildansicht anzeigt; und
eine Informations-Datenbank (50) für das bildgebende Gerät, die die Verwaltungsziffer, welche das bildgebende Gerät (3) identifiziert, mit einer weiteren Verwaltungsziffer, die ein elektronisches Gerät (2) identifiziert, welches von dem bildgebenden Gerät aufgenommen werden kann, zuordnet und speichert;
wobei zu dem Bearbeitungsgerät (9) gehört:
eine Steuereinheit (47), die die eindeutige Information, und die Bildinformation, einschließlich der Verwaltungsziffer, die das bildgebende Gerät (3) in der Datenbank (50) bei Erhalt der eindeutigen Informationen identifiziert, zuordnet und speichert,
wobei die Steuereinheit (47) die Bildinformation einschließlich der Verwaltungsziffer, die das bildgebende Gerät (3) identifiziert und die weitere Verwaltungsziffer, die ein elektronisches Gerät (2) identifiziert, welches durch das bildgebende Gerät (3) in der Datenbank (50) aufgenommen wird, zuordnet und speichert, wenn lediglich die Bildinformation aus dem bildgebenden Gerät und keine eindeutige Information aus dem Lesegerät erhalten wird; und
eine Informationseinheit (58) für einen regelwidrigen Zustand, die lediglich bei Erhalt der Bildinformation von dem bildgebenden Gerät (3) und nicht beim Erhalt einer eindeutigen Information von dem Lesegerät (5) über das Bestehen eines regelwidrigen Zustands informiert.

2. Bildinformations-Verwaltungssystem nach Anspruch 1,
wobei die Speichereinheit (34) des bildgebenden Geräts Identifikationsinformation über das elektronische Gerät unter Angabe der elektronischen Geräte (2) speichert, die in einem Bildbereich vorhanden sind, der von dem bildgebenden Gerät aufgenommen wurde,
und wobei die Einheit (33) des bildgebenden Geräts (3) nicht nur die Bildinformation an das Bearbeitungsgerät (9), sondern ebenfalls die Identifikationsinformation über das elektronische Gerät beim Übertragen der Bildinformationen an das Bearbeitungsgerät überträgt.

## Revendications

1. Système de gestion d'informations d'images comprenant :
un dispositif de traitement (9) ; et
une pluralité de dispositifs électroniques (2) connectés au dispositif de traitement (9) par une ligne de communication (8),
chaque dispositif électronique (2) ayant un dispositif de lecture (5) pour lire des informations uniques à partir d'un support de stockage (4) sur lequel les informations uniques sont stockées ;
une pluralité de dispositifs d'imagerie, chaque dispositif d'imagerie (3) comprenant :
une unité d'imagerie (32) qui commence automatiquement à capturer une vidéo à un instant de détection d'un changement d'une image dans une zone d'image pour produite des informations d'images ;
une unité de stockage (34) qui stocke un numéro de gestion, qui constitue des informations d'identification du dispositif d'imagerie (3) ; et
une unité (33) qui transmet le numéro de gestion et les informations d'images capturées par l'unité d'imagerie (32) au dispositif de traitement (9) ; et
le dispositif de traitement (9) comprenant :
une base de données (48) qui reçoit les informations uniques lues par le dispositif de lecture (5), les informations d'image capturées par le dispositif d'imagerie (3) et le numéro de gestion et associe et stocke les informations uniques et les informations d'images ;
une unité d'affichage (39) qui affiche les informations uniques et les informations d'images associées stockées dans la base de données (48) comme une même image ; et
une base de données d'informations de dispositif d'imagerie (50) qui associe et stocke le numéro de gestion identifiant le dispositif d'imagerie (3) avec un autre numéro de gestion identifiant un dispositif électronique (2) qui peut être capturé par le dispositif d'imagerie ;
dans lequel le dispositif de traitement (9) comprend :
une unité de commande (47) qui associe et stocke les informations uniques et les informations d'images comprenant le numéro de gestion identifiant le dispositif d'imagerie (3) dans la base de données (50) dans le cas où les informations uniques seraient reçues,
dans lequel l'unité de commande (47) associe et stocke les informations d'images comprenant le numéro de gestion identifiant le dispositif d'imagerie (3) et l'autre numéro de gestion identifiant un dispositif électronique (2) capturé par le dispositif d'imagerie (3) dans la base de données (50) dans le cas où seules les information d'images provenant du dispositif d'imagerie seraient reçues, et pas les informations uniques provenant du dispositif de lecture ; et
une unité de notification d'état anormal (58) qui, à la réception seulement des informations d'images provenant du dispositifs d'imagerie (3) et pas des information uniques provenant du dispositif de lecture (5), notifie l'existence d'un état anormal.

2. Système de gestion d' informations d'images selon la revendication 1,
dans lequel l'unité de stockage (34) du dispositif d'imagerie stocke des informations d'identification de dispositifs électroniques spécifiant les dispositifs électroniques (2) existant dans une zone d'image capturée par le dispositif d'imagerie,
et dans lequel l'unité (33) du dispositif d'imagerie (3) transmet au dispositif de traitement (9) non seulement les informations d'images, mais également les informations d'identification de dispositifs électroniques au moment de la transmission des informations d'images au dispositif de traitement.
